# EUROPÄISCHE PATENTSCHRIFT

(11) **EP 2 561 581 B1**
(45) Veröffentlichungstag und Bekanntmachung des Hinweises auf die Patenterteilung: **07.10.2015**
(21) Anmeldenummer: 11710754.0
(22) Anmeldetag: 23.03.2011
(51) Int. Cl.: G01K 1/14, H01R 4/32, H01R 4/30, H01R 4/02, G01K 7/02

(54) **ANSCHLUSSKLEMMENBLOCK**
TERMINAL BLOCK
BLOC DE SERRAGE DE BRANCHEMENT

(30) Priorität: 19.04.2010 DE 102010027911
(43) Veröffentlichungstag der Anmeldung: 27.02.2013
(73) Patentinhaber: Endress+Hauser Wetzer GmbH+Co. KG, 87484 Nesselwang (DE)
(72) Erfinder: ISELT, Torsten, 87435 Kempten (DE); SEEFELD, Peter, 87459 Pfronten (DE)
(74) Vertreter: Andres, Angelika Maria
(86) Internationale Anmeldenummer: PCT/EP2011/054399
(87) Internationale Veröffentlichungsnummer: WO 2011/131440

(56) Entgegenhaltungen:
- DE-A1- 2 534 095
- DE-C1- 4 020 167
- GB-A- 1 574 107
- GB-A- 2 006 794
- US-A- 5 052 950

## Beschreibung

Die Erfindung bezieht sich auf eine Vorrichtung zur Verbindung eines Messaufnehmers mit einer Regel-/Auswerteeinheit, wobei wenigstens eine Klemmvorrichtung an einem Formteil angebracht ist, welche Klemmvorrichtung zur Herstellung einer Verbindung zwischen wenigstens einer Anschlussleitung des Messaufnehmers und wenigstens einer Verbindungsleitung der Regel-/Auswerteeinheit dient, wobei eine Lötfahne vorgesehen ist, welche Lötfahne zum Herstellen einer Lötverbindung zwischen der Anschlussleitung des Messaufnehmers und der Klemmvorrichtung dient.

Für die Prozessmesstechnik ausgelegte Messaufnehmer enthalten üblicherweise Temperatursensorelemente, wie Thermoelemente, Thermo-Messwiderstände aus Drahtwendel oder Dünnfilm-Messwiderstände. Der Messaufnehmer besteht dabei meist aus einem Messeinsatz der in einem Schutzrohr untergebracht ist, wobei das Schutzrohr wiederum bspw. in einen Behälter eingetaucht ist, in welchem Behälter sich ein Messstoff befindet. Das offene Ende des Schutzrohres ist dabei an ein Anschlussgehäuse geführt, in dem zumindest Anschlussklemmen zum Verbinden des Messeinsatzes mit einer bspw. abgesetzten Regel-/Auswerteeinheit vorgesehen sind. Zudem kann in dem Anschlussgehäuse eine Vorverarbeitung eines vermittels des Messeinsatzes aufgenommenen Messignals stattfinden. Derartige Messeinsätze sind u.U. drastischen Temperaturschwankungen und mechanischen Belastungen ausgesetzt, die bspw. von Druckstößen in Rohrleitungen herrühren oder von Schutzrohr-Vibrationen oder anderen Anlagenkomponenten übertragen werden.

Aus dem Stand der Technik ist es bekannt geworden, Klemmschrauben zur Fixierung der abisolierten Kabelenden der Verbindungsleitung zu verwenden, wobei diese Klemmschrauben üblicherweise in Keramikblöcken gehaltert werden. Die abisolierten Kabelenden werden dann von außen radial in vorgesehene Klemmösen eingeführt und anschließend durch Zudrehen der Klemmschrauben fixiert. Dabei besteht die Gefahr, dass die Kabel, insbesondere bedingt durch Abrutschen bei der Anwendung von Schraubwerkzeugen zum Zudrehen der Klemmeschrauben, beschädigt werden.

Da die Klemmschrauben starr fixiert sind, müssen die Kabel einem Biegeverfahren unterzogen werden, um die abisolierten Kabelenden auszurichten. Um diese Ausrichtung der Kabel zu gewährleisten, müssen die Kabelenden abgelängt werden. Zudem können durch Einwirken von Vibrationen sich berührende Kabel beschädigt werden. Dies kann zum Abreissen der Kabelenden oder zu Scheuereffekten, die u.U. eine Beschädigung der Kabelisolation zur Folge haben, führen, wodurch Nebenschlüsse oder Kurzschlüsse resultieren können. Vibrationen können darüber hinaus zur Lockerung der Befestigungsklemmen beitragen, wobei durch andauernde Rüttel- bzw. Vibrationseffekte die abisolierten Kabelenden zusammen geschoben werden können, so dass sich ein zusätzliches Kurzschluss- oder Nebenschlussrisiko ergibt.

DE-C1-4020167 offenbart eine Vorrichtung nach dem Oberbegriff des Anspruchs 1.

Der Erfindung liegt die daher Aufgabe zugrunde, eine gegenüber Vibrationen und/oder anderen schadhaften umgebungsbedingten Einflüssen robustere Verbindung zwischen den Anschlussleitungen des Messaufnehmers und den Verbindungsleitungen der Regel-/Auswerteeinheit vorzuschlagen.

Die Aufgabe wird erfindungsgemäß durch die Vorrichtung des Anspruchs 1 gelöst. Die Lötfahne ist wenigstens teilweise so ausgestaltet und dazu dient, etwaig auftretende Vibrationen zu dämpfen.

Insbesondere kann die Lötfahne dazu dienen, die Übertragung etwaig auftretender Vibrationen, insbesondere von dem Formteil und/oder der Klemmvorrichtung, auf die Lötverbindung zu dämpfen. Ferner kann die Lötfahne dazu dienen, die Übertragung etwaig auftretender Vibrationen von dem Formteil oder der Klemmvorrichtung auf die Anschlussleitung zu dämpfen. Die Lötfahne kann auch dazu dienen, die Übertragung etwaig auftretender Vibrationen von den Anschlussleitungen auf die Klemmvorrichtung und/oder die Verbindungsleitungen zu dämpfen.

Da es sich bei den Anschluss- und/oder Verbindungsleitungen oftmals und gerade bei Thermometern um mineralisolierte Mantelleitungen handelt, die relaiv starr sind, und aufgenommene Vibrationen nur schwach dämpfen, ist es eine Idee der Erfindung, etwaig auftretende Vibrationen vermittels der Lötfahne zu dämpfen. Dafür kann die Lötfahne entsprechend ausgestaltet sein. Bspw. kann die Lötfahne entsprechend geformt oder anderweitig funktionalisiert sein. Unter Vibrationen sind dabei vornehmlich mechanische Schwingungen zu verstehen. Insbesondere durch Vibrationen bzw. mechanische Schwingungen mit einer bestimmten Frequenz, Phase oder Amplitude, die bspw. über die Anschlussleitung und die Verbindungsleitung einkoppeln, kann es, wie erwähnt, zu Beschädigungen an der Klemmvorrichtung und/oder der Lötverbindung, über welche Lötverbindung die Klemmvorrichtung mit der Anschlussleitung verbunden ist, oder aber auch an der Anschluss- und/oder Verbindungsleitung selbst kommen.

Die Lötfahne kann zur Herstellung der Lötverbindung zwischen der Anschlussleitung des Messaufnehmers mit der Verbindungsleitung der Regel-/Auswerteeinheit über die Klemmvorrichtung dienen. Dafür kann bspw. ein Teilbereich der Lötfahne mit der Anschlussleitung verlötet werden, wobei die Lötfahne wiederum mit der Klemmvorrichtung verbunden ist. Zusätzlich kann die Lötfahne auch dazu dienen, die Anschlussleitung wenigstens teilweise mechanisch von der Klemmvorrichtung, den Verbindungsleitungen, dem Formteil, dem Schutzrohr und/oder einem anderen Gehäuse- oder Anlagenteil zu entkoppeln. Dafür kann ein sich an den zum Herstellen der Lötverbindung vorgesehenen Teilbereich der Lötfahne anschliessender Teilbereich der Lötfahne entsprechend ausgestaltet sein. Bevorzugte Ausgestaltungen sind in den folgenden Absätzen beschrieben. Durch die bspw. federnde insbesondere dämpfende Wirkung der Lötfahne kann der durch den Lötvorgang entstandene Lötpunkt zwischen der Anschlussleitung und der Verbindungsleitung vor mechanischen Beeinträchtigungen wie Stössen und Vibrationen geschützt werden. Die Lötfahne kann dabei an der Klemmvorrichtung befestigt oder aber einstückig mit der Klemmvorrichtung ausgebildet sein. Als Klemmvorrichtung können verschiedene aus der Elektrotechnik bekannte Klemmen wie z.B. Federzugklemmen oder Schraubklemmen verwendet werden. physikalischen und/oder chemischen Prozessgröße, insbesondere einer Temperatur, und die Regel-/Auswerteeinheit dient zur Bearbeitung eines von dem Messaufnehmer stammenden Messsignals, wobei die Anschlussleitung und die Verbindungsleitung dazu dienen, dass Messsignal von dem Messaufnehmer an die Regel-/Auswerteeinheit zu übertragen. Der Messaufnehmer verfügt bspw. über ein Sensorelement, welches Sensorelement zur Aufnahme der physikalischen und/oder chemischen Prozessgröße bzw. zur Wandlung der Prozessgröße in das Messsignal dient. Die Anschlussleitung und die Verbindungsleitug können dann zum Übertragen dieses Messsignals dienen. Die Anschlussleitungen können dafür bspw. mit dem Sensorelement verbunden sein. Zudem kann das Sensorelement über die Anschlussleitungen und ggf. auch über die Verbindungsleitungen mit der zum Betrieb erforderlichen elektrischen Spannung bzw. dem zum Betrieb erforderlichen elektrischem Strom versorgt werden.

Die Lötfahne ist mehrfach V-, N- oder M-förmig, gefaltet. Insbesondere zur Dämpfung von etwaigen Vibrationen kann die Lötfahne vorzugsweise zieharmonika-förmig gefaltet sein, also ein zickzackförmiges Profil aufweisen. Die Lötfahne kann bspw. auch aus Teilbereichen, die aus verschiedenen Materialien bestehen, gefertigt sein. Die Lötfahne und/oder der zur Dämpfung von Vibrationen dienende und entsprechend ausgestaltete Teilbereich der Lötfahne kann hinsichtlich ihrer bzw. seiner Dämpfungseigenschaften an die Frequenz und/oder Amplitude ggf. auftretenden Vibrationen angepasst sein. Ferner kann die Lötfahne zu diesem Zweck aus einem Material gefertigt sein, welches ebenfalls hinsichtlich seiner Dämpfungseigenschaften an die ggf. bspw. während des Betriebs der Messvorrichtung, in welcher die vorgeschlagene Vorrichtung eingebaut ist, auftretende Vibrationen angepasst ist.

In einer weiteren Ausgestaltung handelt es sich sowohl bei der Anschlussleitung des Messaufnehmers als auch bei der Verbindungsleitung der Regel-/Auswerteeinheit um eine, insbesondere mineralisolierte, Mantelleitung. Wie bereits erwähnt, zeichnen sich insbesondere mineralisolierte Mantelleitungen durch eine hohe Biegesteifigkeit aus - sind also relativ unelastisch. Dies kann zu Schäden beim Ausrichten der Verbindungsleitung führen. Aufgrund der hohen Biegesteifigkeit kommt es auch zur annähernd ungedämpften Weiterleitung von Vibrationen über die insbesondere mineralisolierte Mantelleitung. Die Lötfähne kann in einem solchen Fall dann bspw. wenigstens teilweise aus einem biegeweicheren Material als die Anschluss- und/oder Verbindungsleitung bestehen und dadurch die Übertragung von Vibrationen dämpfen.

In einer weiteren Ausgestaltung dient die Klemmvorrichtung ferner zur Aufnahme und zum Fixieren eines abisolierten Endes der Verbindungsleitung der Regel-/Auswerteeinheit.

In einer weiteren Ausgestaltung weist die Klemmvorrichtung eine Durchführung zur Aufnahme des abisolierten Endes der Verbindungsleitung auf. Die Durchführung kann sich dabei insbesondere zentral von einer Seite der Klemmvorrichtung zur anderen insbesondere gegenüberliegenden Seite der Klemmvorrichtung erstrecken.

In einer weiteren Ausgestaltung dient die Lötfahne als Begrenzung beim Einführen des abisolierten Endes der Verbindungsleitung in die Durchführung. Die Lötfahne kann dabei so gebogen oder gefaltet sein, dass sie die gedachte Verlängerung der Durchführung begrenzt. Dadurch kann eine definiert Aufnahmestrecke geschaffen werden, die einen ebenso definierten Einschub der Verbindungsleitung in die Durchführung ermöglicht.

In einer weiteren Ausgestaltung ist die Klemmvorrichtung beweglich, insbesondere drehbar, mit dem Formteil verbunden, insbesondere an dem Formteil befestigt. Durch die bewegliche, insbesondere drehbare, Verbindung zwischen Formteil und Klemmvorrichtung kann das Einführen der insbesondere abisolierten Enden der Verbindungsleitung in die Durchführung erleichtert werden. Von Vorteil dabei ist, dass die Verbindungsleitung nicht mehr aufwendig zurechtgebogen werden muss, um in die Durchführung eingeführt zu werden. Besonders bei mineralisoliereten Mantelleitungen wie sie in Anschlussgehäusen bei hohen Umgebungstemperaturen zur Verbindung mit der Regel-/Auswerteeinheit verwendet werden, ist ein solches Zurechtbiegen umständlich und kann zur Beschädigung der Verbindungsleitungen führen.

Alternativ kann die Klemmvorrichtung auch zur Aufnahme und zum Fixieren eines insbesondere abisolierten Endes der wenigstens einen Anschlussleitung des Messaufnehmers dienen. Die Anschlussleitung und die Verbindungsleitung können dann bspw. über eine Lüsterklemme miteinander verbunden werden. Die Klemmvorrichtung kann daher auch dann beweglich, insbesondere drehbar, mit dem Formteil verbunden sein, insbesondere an dem Formteil befestigt sein, wenn keine Lötfahne zur Verbindung mit der Anschlussleitung vorgesehen ist.

In einer weiteren Ausgestaltung ist die Klemmvorrichtung um wenigstens eine Achse beweglich, insbesondere drehbar, in dem Formteil oder in einer an dem Formteil befestigten Lagerung gelagert. Bei der Lagerung kann es sich bspw. um eine mechanische Lagerung, wie bspw. ein Festlager oder ein Loslager oder einer Kombination derselben handeln. Der Typ der Lagerung und die Freiheitsgrade zur Orientierung der Klemmvorrichtung können dabei an die Einbaubedingungen der Vorrrichtung bspw. in dem Anschlussgehäuse angepasst sein.

In einer weiteren Ausgestaltung dient die, insbesondere beweglich befestigte, Klemmvorrichtung zur im Wesentlichen mit dem Ende der Mantelleitung fluchtenden Aufnahme des abisolierten Endes der Verbindungsleitung und/oder zum Schutz vor Beschädigungen aufgrund etwaiger Vibrationen. Durch die vermittels der beweglichen Klemmvorrichtung eingebrachten Freiheitsgrade kann es ebenfalls zu einer Dämpfung von Vibrationen und einer teilweisen mechanischen Entkopplung zwischen dem Formteil, den Anschluss- und/oder Verbindungsleitungen bzw. der Lötstelle kommen. Dadurch, dass die Klemmvorrichtung teilweise beweglich gelagert ist, kann die Klemmvorrichtung zudem ausgerichtet und das Einführung und Einklemmen der Verbindungsleitung erleichtert werden.

In einer weiteren Ausgestaltung handelt es sich bei der Klemmvorrichtung im Wesentlichen um eine Klemmverschraubung zum Fixieren des abisolierten Endes der Verbindungsleitung der Regel-/Auswerteeinheit.

In einer weiteren Ausgestaltung weist die Klemmvorrichtung einen Klemmkörper auf, der drehbar an dem Formteil befestigt, insbesondere gelagert, ist.

In einer weiteren Ausgestaltung weist der Klemmkörper ein Gewinde auf, in das eine Klemmschraube eindrehbar ist, wobei Klemmkörper, Klemmschraube und Gewinde derart zusammenwirken, dass beim Eindrehen der Klemmschraube das abisolierte Ende der Verbindungsleitung der Regel-/Auswerteeinheit fixiert wird.

Die Erfindung wird anhand der nachfolgenden Zeichnungen näher erläutert. Es zeigt:
Fig. 1: eine schematische Darstellung einer Messvorrichtung zur Bestimmung einer Prozessgröße,
Fig. 2: eine schematische Darstellung eines Anschlussklemmenblocks der Messvorrichtung,
Fig. 3a): eine schematische Darstellung eines Klemmkörpers einer Klemmvorrichtung des Anschlussklemmenblocks,
Fig. 3b): eine schematische Darstellung einer Klemmschraube mit einem Klemmelement zur Montage auf dem Klemmkörper aus Figur 3a).

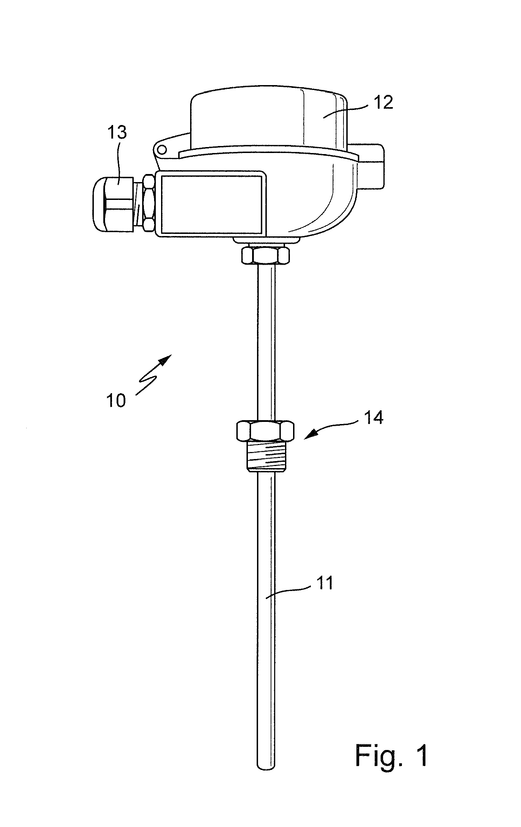

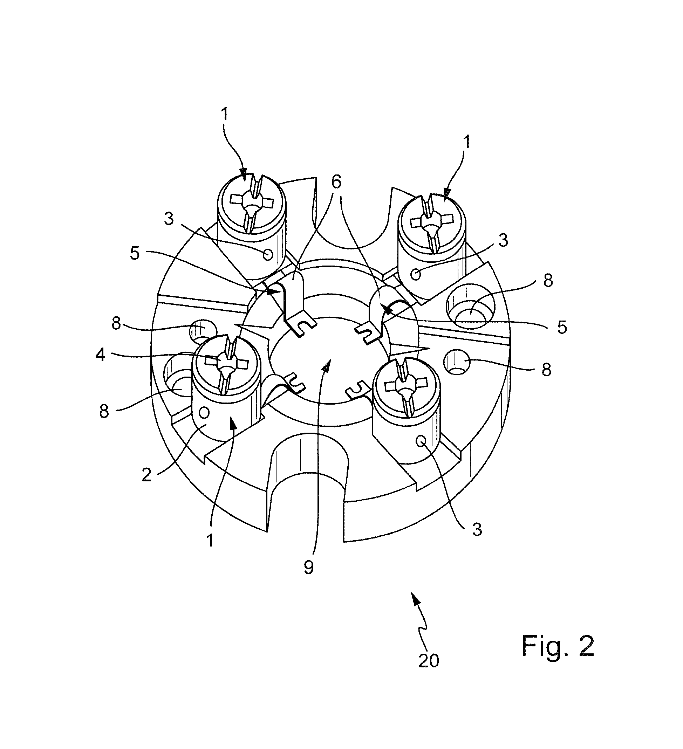

Figur 1 zeigt eine Messvorrichtung 10 zur Bestimmung einer Prozessgröße wie sie bspw. in einer Anlage der Prozessautomatisierungstechnik zur Bestimmung der Temperatur verwendet wird. Die Messvorrichtung 10 besteht dabei im Wesentlichen aus einem Schutzrohr 11 und einem Anschlussgehäuse 12, wobei Schutzrohr 11 und Anschlussgehäuse 12 miteinander verbunden sind. In dem Schutzrohr 11 befindet sich ein Messaufnehmer hier in Form eines sog. Messeinsatzes, nicht gezeigt, zur Aufnahme der Temperatur. Dieser Messeinsatz verfügt über ein an der Spitze des Schutzrohres angeordnetes Sensorelement. Das Sensorelement ist über Anschlussleitungen mit dem Anschlussgehäuse 12 verbunden. In dem Anschlussgehäuse 12 befindet sich eine Regel-/Auswerteeinheit, nicht gezeigt, bspw. in Form einer Elektronik, zur Vor- und/oder Weiterbearbeitung eines vermittels des Sensorelements aufgenommenen Messignals. Die Regel-/auswerteeinheit ist dabei über Verbindungsleitungen mit den Anschlussleitungen verbunden. Aufgrund der Modularität der Messvorrichtung 10 und/oder zur Montage der Messvorrichtung 10 besteht die Notwendigkeit, die Anschlussleitungen des Messaufnehmers mit den Verbindungsleitungen der in dem Anschlussgehäuse 12 angeordneten Regel-/Auswerteeinheit zu verbinden. Figur 2 zeigt eine Ausgestaltung der dafür vorgeschlagenen Vorrichtung. Die in in Figur 1 gezeigte Kabeleinführung 13 dient zur weiteren Verbindung der Messvorrichtung 20 z.B. mit einer entfernten Warte. Über den Prozessanschluss 14 kann die Messvorrichtung 20 bspw. an einen Behälter angeschlossen werden in dem sich der Messstoff befindet.

Figur 2 zeigt eine schematische Darstellung in Form einer perspektivischen Ansicht einer Ausgestaltung der vorgeschlagenen Vorrichtung, im Folgenden auch Anschlussklemmenblock 20 genannt. Der Anschlussklemmenblock 20 verfügt über mehrere Klemmvorrichtungen 1, welche Klemmvorrichtungen 1 zur Kontaktierung der Anschlussleitungen des Messaufnehmers dienen und hier auf der Oberseite eines Formteils 7 angeordnet sind. In Figur 2 sind beispielhaft vier Klemmvorichtungen 1 gezeigt. Anstatt der in Figur 2 gezeigten vier Klemmvorrichtungen 1 kann auch eine andere Anzahl an Klemmvorrichtungen 1 vorgesehen sein.

Das Formteil 7 besteht bspw. aus einer Keramik und ist an die Einbaubedingungen, wie sie bspw. in Verbindung mit dem Anschlussgehäuse 12 oder dem Schutzrohr 11 vorgegeben sind, angepasst. Die Klemmvorrichtungen 1 zur Verbindung der Anschluss- und der Verbindungsleitungen sind dabei symmetrisch im Wesentlichen kreisförmig um eine zentrale Bohrung 9 herum auf Formteil 7 angeordnet. Die zentrale Bohrung 9 dient dabei zur Aufnahme der Anschlussleitungen des Messaufnehmers. Diese bspw. zum Zeitpunkt der Montage der Messvorrichtung 10 aus dem Schutzrohr 11, in welches der Messeinsatz eingesetzt ist, heraus ragenden Anschlussleitungen können jeweils mit einer Lötfahne 5 verbunden werden. Die verbindung kann vermittels einer Lötverbindung zwischen der Lötfahne 5 und den Anschlussleitungen erfolgen. Die Anschlussleitungen sind dann mit den Klemmvorrichtungen 1 elektrisch leitend verbunden. Die Lötfahne 5 kann dabei bspw.aus einer Metalllegierung oder einem anderen zur Herstellung der Lötverbindung geeigneten Material bestehen.

Jede der Lötfahnen 5 weist, wie in Figur 2 gezeigt, einen V-förmig gebogenen Teilbereich 6 auf, der zur Dämpfung etwaiger Vibrationen dient. Durch diese gebogenen Teilbereiche 6 können Vibrationen zwischen den Anschlussleitungen und dem Anschlussgehäuse 12 und/oder dem Schutzrohr 11 entkoppelt werden.

Zur Befestigung mit dem Anschlussgehäuse 12 und/oder dem Schutzrohr 11 weist der Anschlussklemmenblock 20 zusätzliche Bohrungen 8 auf, durch die hindurch Verbindungsmittel wie bspw. Schrauben zur Befestigung geführt werden können, um das Formteil mit dem Schutzrohr 11 und/oder dem Anschlussgehäuse 12 zu verbinden.

Einerseits können also die Anschlussleitungen des Messaufnehmers von innen durch die zentrale Bohrung 9 des Formteils 7 hindurch an den Klemmvorrichtungen 1 befestigt werden. Andererseits können von außen die Verbindungsleitungen der Regel-/Auswerteeinheit mit den Klemmvorrichtungen 1 verbunden werden. Dafür werden die abisolierten Enden der Verbindungsleitungen in dafür vorgesehen Klemmösen 3 geführt. Zur besseren, insbesondere fluchtenden, Ausrichtung der Verbindungsleitungen mit der zur Aufnahme dienenden Durchführung 15 der Klemmvorrichtung 1 können die Klemmvorrichtungen 1 drehbar auf dem Formteil 7 angebracht sein. Um nun die Anschlussleitungen, über die Klemmvorrichtungen 1 zu kontaktieren, kann bspw. eine Klemmschraube 17 verwendet werden, vermittelt derer die Klemmvorrichtung 1 geschlossen wird. Die Klemmschraube 17 kann zudem mit einem Feingewinde ausgestattet sein. Durch das Feingewinde kann eine höhere Anpresskraft der Klemmvorrichtung 1 erreicht werden. Eine höhere Anspresskraft ist dabei zum Dämpfen etwaiger Vibrationen von Vorteil. Darüber hinaus kann eine Schraubenfeder, nicht gezeigt, vorgesehen sein, die der Anpresskraft der Klemmschraube 17 entgegenwirkt. Durch diese Maßnahmen kann eine Vibrationsfestigkeit von 60g gemäß IEC60751 erreicht werden. Zur besseren Führung eines zum Zudrehen der Klemmschraube 17 verwendeten Werkzeugs, kann die Klemmschraube 17 zusätzlich einen umrändelten oder umbördelten Schraubenkopf 4 aufweisen. Durch den umrändelten oder umbördelten Schraubenkopf 4 wird eine einfacherere und sicherere Handhabung des verwendeten Werkzeugs in Verbindung mit dem Anschlussklemmenblock 20 ermöglicht.

Weiterhin ist aus Figur 2 ersichtlich, dass die Lötfahnen 5, insbesondere der mäandrierend geformte Teilbereich 6 als Vorschub-Stopp beim Einführen einer Verbindungsleitung durch die Klemmöse und in die Durchführung der Klemmvorrichtung 1 dienen. Der V-förmige Teilbereich der Lötfahne ist dabei bis auf die Höhe einer gedachten Fortsetzung der Durchführung gebogen und ermöglich es dadurch einen, insbesondere maximalen, Einschub für die Verbindungsleitungen zu definieren.

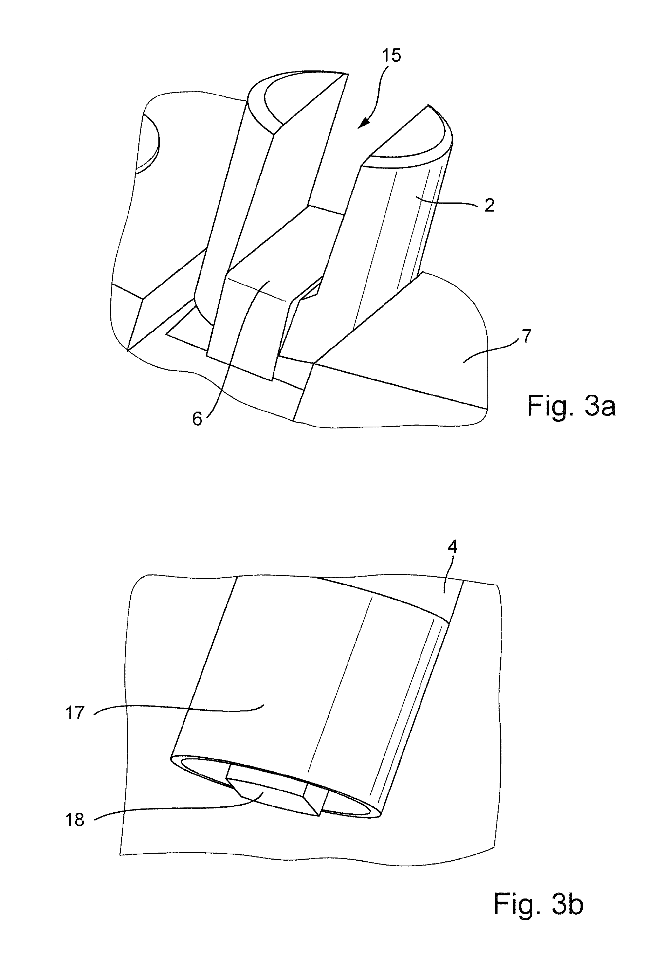

Figur 3a) zeigt eine schematische Darstellung eines Klemmkörpers 2 und Figur 3b) eine Darstellung einer Klemmschraube 17 die auf den Klemmkörper 2 aufgeschraubbar ist. Der Klemmkörper 2 ist dabei drehbar auf dem Formteil 7 gelagert und weist eine im Wesentlichen quaderförmige Durchführung 15 zur Aufnahme der Verbindungsleitung auf. Der Klemmkörper 2 dient dabei als Widerlager für ein Klemmelement18 und weist eine im Wesenltichen flache Kontaktfläche 16 auf. Das Klemmelement 18 ist dabei drehbar in der Klemmschraube 17 gelagert. Damit kann eine Übertragung der

Drehbewegung der Klemmschraube 17 auf die in die Durchführung 15 eingeführte Verbindungsleitung vermieden werden und eine Klemmverbindung erreicht werden, ohne dass die Verbindungsleitung beim Festdrehen beschädigt wird.

### Bezugszeichenliste

- 1: Klemmvorrichtung
- 2: Klemmkörper
- 3: Klemmöse
- 4: Schraubenkopf
- 5: Lötfahne
- 6: federnder Teilbereich der Lötfahne
- 7: Formteil
- 8: Bohrung zur Befestigung des Formteils
- 9: zentrale Bohrung zur Aufnahme der Anschlussleitungen
- 10: Messvorrichtung
- 11: Schutzrohr
- 12: Anschlussgehäuse
- 13: Kabeleinführung
- 14: Prozessanschluss
- 15: Durchführung zur Aufnahme der Verbindungsleitung der Regel-/Auswerteeinheit
- 16: Kontaktfläche für die Verbindungsleitung der Regel-/Auswerteeinheit, welche als Klemmwiderlager dient
- 17: Klemmschraube
- 18: Klemmelement
- 20: Anschlussklemmenblock

## Patentansprüche

1. Vorrichtung (20) zur Verbindung eines Messaufnehmers mit einer Regel-/Auswerteeinheit,
wobei wenigstens eine Klemmvorrichtung (1) an einem Formteil (7) angebracht ist,
welche Klemmvorrichtung (1) zur Herstellung einer Verbindung zwischen wenigstens einer Anschlussleitung des Messaufnehmers und wenigstens einer Verbindungsleitung der Regel-/Auswerteeinheit dient,
wobei eine Lötfahne (5) vorgesehen ist,
welche Lötfahne (5) zum Herstellen einer Lötverbindung zwischen der Anschlussleitung des Messaufnehmers und der Klemmvorrichtung dient,
wobei
die Lötfahne (5) wenigstens teilweise so ausgestaltet ist und dient dazu, etwaig auftretende Vibrationen, insbesondere von dem Formteil und/oder der Klemmvorrichtung auf die Lötverbindung, oder von dem Formteil oder der Klemmvorrichtung auf die Anschlussleitung, oder von den Anschlussleitungen auf die Klemmvorrichtung und/oder die Verbindungsleitungen, zu dämpfen
**dadurch gekennzeichnet, dass**
die Lötfahne mehrfach, V-, N- oder M-förmig, gefaltet ist bzw. einen V-förmig gebogenen Teilbereich aufweist, der zur Dämpfung etwaiger Vibrationen dient.

2. Vorrichtung (20) nach Anspruch 1,
**dadurch gekennzeichnet,**
**dass** die Lötfahne (5) dazu dient, die Übertragung etwaig auftretender Vibrationen auf die Lötverbindung zu dämpfen.

3. Vorrichtung (20) nach Anspruch 1 oder 2,
**dadurch gekennzeichnet,**
**dass** der Messaufnehmer zur Aufnahme einer physikalischen und/oder chemischen Prozessgröße, insbesondere einer Temperatur, dient, und dass die Regel-/Auswerteeinheit zur Bearbeitung eines von dem Messaufnehmer stammenden Messsignals dient,
wobei die Anschlussleitung und die Verbindungsleitung dazu dienen, dass Messsignal zwischen dem Messaufnehmer und der Regel-/Auswerteeinheit zu übertragen.

4. Vorrichtung (20) nach einem der vorherigen Ansprüche,
**dadurch gekennzeichnet,**
**dass** es sich sowohl bei der Anschlussleitung des Messaufnehmers als auch bei der Verbindungsleitung der Regel-/Auswerteeinheit um eine, insbesondere mineralisolierte, Mantelleitung handelt.

5. Vorrichtung (20) nach einem der vorherigen Ansprüche,
**dadurch gekennzeichnet,**
**dass** die Klemmvorrichtung (1) ferner zur Aufnahme und zum Fixieren eines abisolierten Endes der Verbindungsleitung der Regel-/Auswerteeinheit dient.

6. Vorrichtung (20) nach Anspruch 5,
**dadurch gekennzeichnet,**
**dass** die Klemmvorrichtung (1) eine Durchführung (15) zur Aufnahme des abisolierten Endes der Verbindungsleitung aufweist.

7. Vorrichtung (20) nach Anspruch 6,
**dadurch gekennzeichnet,**
**dass** die Lötfahne (5) als Begrenzung beim Einführen des abisolierten Endes der Verbindungsleitung in die Durchführung dient.

8. Vorrichtung (20) nach einem der vorherigen Ansprüche,
**dadurch gekennzeichnet,**
**dass** die Klemmvorrichtung (1) beweglich, insbesondere drehbar, mit dem Formteil (7) verbunden, insbesondere an dem Formteil (7) befestigt, ist.

9. Vorrichtung (20) nach einem der vorherigen Ansprüche,
**dadurch gekennzeichnet,**
**dass** die Klemmvorrichtung (1) um wenigstens eine Achse beweglich, insbesondere drehbar, in dem Formteil (7) oder in einem an dem Formteil (7) befestigten Lagerung gelagert ist.

10. Vorrichtung (20) nach einem der vorherigen Ansprüche,
**dadurch gekennzeichnet,**
**dass** die, insbesondere beweglich befestigte, Klemmvorrichtung (1) zur im Wesentlichen mit der Durchführung (15) und/oder dem Ende der Mantelleitung fluchtenden Aufnahme des abisolierten Endes der Verbindungsleitung und/oder zur zum Schutz vor Beschädigungen aufgrund etwaiger Vibrationen dient.

11. Vorrichtung (20) nach einem der vorherigen Ansprüche,
**dadurch gekennzeichnet,**
**dass** es sich bei der Klemmvorrichtung (1) im Wesentlichen um eine Klemmverschraubung zum Fixieren des abisolierten Endes der Verbindungsleitung der Regel-/Auswerteeinheit handelt.

12. Vorrichtung (20) nach einem der vorherigen Ansprüche,
**dadurch gekennzeichnet,**
**dass** die Klemmvorrichtung (1) einen Klemmkörper (2) aufweist, der drehbar an dem Formteil (7) befestigt, insbesondere gelagert, ist.

13. Vorrichtung (20) nach einem der vorherigen Ansprüche,
**dadurch gekennzeichnet,**
**dass** der Klemmkörper (2) ein Gewinde aufweist in das eine Klemmschraube (17) eindrehbar ist,
wobei Klemmkörper (2), Klemmschraube (17) und Gewinde derart zusammenwirken, dass beim Eindrehen der Klemmschraube (17) das abisolierte Ende der Verbindungsleitung der Regel-/Auswerteeinheit fixiert wird.

## Claims

1. Apparatus (20) designed to connect a sensor to a control/evaluation unit,
wherein at least one clamping device (1) is fitted on a molded part (7),
said clamping device (1) serving to establish a connection between at least one connecting cable of the sensor and at least one connecting cable of the control/evaluation unit,
wherein a soldering lug (5) is provided,
said soldering lug (5) serving to establish a solder joint between the connecting cable of the sensor and the clamping device,
wherein
the soldering lug (5) is at least partially designed in such a way as to dampen any vibrations occurring, particularly vibrations from the molded part and/or the clamping device on the solder joint, or from the molded part or the clamping device on the connecting cable, or from the connecting cables on the clamping device and/or the connecting cables,
**characterized in that**
the soldering lug is repeatedly folded in a V, N or M shape, or has a V-shaped partial area that is used to dampen any vibrations.

2. Apparatus (20) as claimed in Claim 1,
**characterized in that**
the soldering lug (5) is used to dampen the transfer of any vibrations onto the solder joint.

3. Apparatus (20) as claimed in Claim 1 or 2,
**characterized in that**
the sensor is used to record a physical and/or chemical process variable, particularly a temperature, and **in that** the control/evaluation unit is used to process a measuring signal coming from the sensor, where the connecting cables are used to transmit the measuring signal between the sensor and the control/evaluation unit.

4. Apparatus (20) as claimed in one of the previous claims,
**characterized in that**
the connecting cable of the sensor and the connecting cable of the control/evaluation unit is a sheathed cable, particularly with mineral insulation.

5. Apparatus (20) as claimed in one of the previous claims,
**characterized in that**
the clamping device (1) also serves to accommodate and fix a stripped end of the connecting cable of the control/evaluation unit.

6. Apparatus (20) as claimed in Claim 5,
**characterized in that**
the clamping device (1) has a feedthrough (15) designed to accommodate the stripped end of the connecting cable.

7. Apparatus (20) as claimed in Claim 6,
**characterized in that**
the soldering lug (5) acts as a limit when introducing the stripped end of the connecting cable into the feedthrough.

8. Apparatus (20) as claimed in one of the previous claims,
**characterized in that**
the clamping device (1) is connected in a movable, particularly rotatable, manner with the molded part (7), particularly secured to the molded part (7).

9. Apparatus (20) as claimed in one of the previous claims,
**characterized in that**
the clamping device (1) is movably mounted, particularly pivot mounted, around at least one axis in the molded piece (7), or in a mounting secured on the molded piece (7).

10. Apparatus (20) as claimed in one of the previous claims,
**characterized in that**
the clamping device (1), particularly a clamping device secured in a mobile manner, serves to accommodate the stripped end of the connecting cable in a manner which is essentially aligned with the feed-through (15) and/or the end of the connecting cable and/or to protect against damage caused by any vibrations.

11. Apparatus (20) as claimed in one of the previous claims,
**characterized in that**
the clamping device (1) is essentially a compression fitting for fixing the stripped end of the connecting cable of the control/evaluation unit.

12. Apparatus (20) as claimed in one of the previous claims,
**characterized in that**
the clamping device (1) has a clamping body (2), which is rotatably secured, particularly pivoted, on the molded piece (7).

13. Apparatus (20) as claimed in one of the previous claims,
**characterized in that**
the clamping body (2) has a thread into which a clamping screw (17) can be screwed,
wherein the clamping body (2), the clamping screw (17) and the thread work together in such a way that the stripped end of the connecting cable of the control/evaluation unit is fixed in place when the clamping screw (17) is screwed in.

## Revendications

1. Dispositif (20) destiné à la liaison entre un capteur (1) et une unité de régulation / d'exploitation,
pour lequel est installé au moins un dispositif de serrage (1) sur une pièce formée (7),
lequel dispositif de serrage (1) est prévu pour l'établissement d'une liaison entre au moins un câble de raccordement du capteur et au moins un câble de liaison de l'unité de régulation / exploitation,
pour lequel est prévu une languette de soudage (5),
laquelle languette de soudage (5) sert à l'établissement d'une connexion soudée entre le câble de raccordement du capteur et le dispositif de serrage,
pour lequel
la languette de soudage (5) est conçue au moins partiellement de manière à amortir les vibrations apparaissant éventuellement, notamment par la pièce formée et/ou le dispositif de serrage sur la connexion soudée, ou par la pièce formée ou le dispositif de serrage sur le câble de raccordement, ou par les câbles de raccordement sur le dispositif de serrage et/ou les câbles de liaison,
**caractérisé**
**en ce que** la languette de soudage est pliée plusieurs fois en forme de V, de N ou de M, ou présente une zone partielle en forme de V, laquelle sert à l'amortissement d'éventuelles vibrations.

2. Dispositif (20) selon la revendication 1,
**caractérisé**
**en ce que** la languette de soudage (5) sert à amortir la transmission des vibrations apparaissant éventuellement sur la connexion soudée.

3. Dispositif (20) selon la revendication 1 ou 2,
**caractérisé**
**en ce que** le capteur sert à l'acquisition d'une grandeur process physique et/ou chimique, notamment d'une température, et en ce que l'unité de régulation / d'exploitation sert au traitement d'un signal de mesure provenant du capteur,
le câble de raccordement et le câble de liaison servant à transmettre le signal de mesure entre le capteur et l'unité de régulation / d'exploitation.

4. Dispositif (20) selon l'une des revendications précédentes,
**caractérisé**
**en ce qu'**il s'agit, à la fois concernant le câble de raccordement du capteur et le câble de liaison de l'unité de régulation / d'exploitation, d'un câble sous gaine, notamment à isolation minérale.

5. Dispositif (20) selon l'une des revendications précédentes,
**caractérisé**
**en ce que** le dispositif de serrage (1) sert en outre à la réception et la fixation d'une extrémité dénudée du câble de liaison de l'unité de régulation / d'exploitation.

6. Dispositif (20) selon la revendication 5,
**caractérisé**
**en ce que** le dispositif de serrage (1) présente une traversée (15) destinée à la réception de l'extrémité dénudée du câble de liaison.

7. Dispositif (20) selon la revendication 6,
**caractérisé**
**en ce que** la languette de soudage (5) sert de butée lors de l'introduction de l'extrémité dénudée du câble de liaison dans la traversée.

8. Dispositif (20) selon l'une des revendications précédentes,
**caractérisé**
**en ce que** le dispositif de serrage (1) est relié de façon mobile, notamment tournante, par rapport à la pièce formée (7), notamment fixé sur la pièce formée (7).

9. Dispositif (20) selon l'une des revendications précédentes,
**caractérisé**
**en ce que** le dispositif de serrage (1) est mobile, notamment tournant, autour d'au moins un axe dans la pièce formée (7), ou est disposé dans un logement fixé sur la pièce formée (7).

10. Dispositif (20) selon l'une des revendications précédentes,
**caractérisé**
**en ce que** le dispositif de serrage (1), fixé notamment de façon mobile, sert à recueillir l'extrémité dénudée du câble de liaison affleurant pour l'essentiel la traversée (15) et/ou l'extrémité du câble sous gaine, et/ou sert à la protection contre les endommagements dus à d'éventuelles vibrations.

11. Dispositif (20) selon l'une des revendications précédentes,
**caractérisé**
**en ce que**, concernant le dispositif de serrage (1), il s'agit pour l'essentiel d'un raccord coulissant destiné à la fixation de l'extrémité dénudée du câble de liaison de l'unité de régulation / d'exploitation.

12. Dispositif (20) selon l'une des revendications précédentes,
**caractérisé**
**en ce que** le dispositif de serrage (1) comporte un corps de serrage (2), qui est fixé, notamment suspendu, de façon tournante sur la pièce formée (7).

13. Dispositif (20) selon l'une des revendications précédentes,
**caractérisé**
**en ce que** le corps de serrage (2) présente un filetage dans lequel peut être vissé une vis de serrage (17),
pour lequel le corps de serrage (2), la vis de serrage (17) et le filetage interagissent de telle manière que l'extrémité dénudée du câble de liaison de l'unité de régulation / d'exploitation est fixée lors de l'introduction de la vis de serrage (17).
